# EUROPEAN PATENT APPLICATION

(11) **EP 1 528 811 A2**
(43) Date of publication of application: **04.05.2005**
(21) Application number: 04256658.8
(22) Date of filing: 28.10.2004
(51) Int. Cl.: H04N 7/24

(54) **Communications method and communications session participants**

(30) Priority: 31.10.2003 US 699444
(71) Applicant: Hewlett-Packard Development Company, L.P., Houston, TX 77070 (US)
(72) Inventor: Mukherjee, Debargha, San Jose, CA 95130 (US); Said, Amir, Cupertino, CA 95014 (US)
(74) Representative: Jehan, Robert

(57) **Abstract**

Communications methods, communications session organizers, communications session participants, articles of manufacture, and communications system are described. According to one aspect, a communications method includes providing scalable media data, organizing the scalable media data into a plurality of subparts (47), providing a plurality of data requests from a plurality of participants (14) requesting different ones of the subparts (47) during user interaction with the media data, after the providing the data requests, scaling respective ones of the requested subparts (47) of the scalable media data according to receiving attributes of the respective participants (14), and communicating the scaled subparts to respective ones of the participants (14).

## Description

Aspects of the disclosure relate to communications methods, communications session organizers, communications session participants, articles of manufacture, and communications systems.

Interactive media sessions are increasing in popularity. As the processing power of computers continues to increase, and communications bandwidth of communications devices is improved, the popularity of interactive media communications is also expected to increase. However, to date, the substantial focus has been on media delivery with relatively little advancements for interactive media experiences.

Exemplary interactive media communications sessions may involve 3D graphics or other rich interactive media having very large files (even after compression) to be communicated and processed. The amount of data increases exponentially with richness and raises formidable issues in distribution and experience of the media over the Internet.

For example, in many situations it may not be possible to communicate these files to clients in entirety before experience commences. In fact, even very high bandwidth connections by modern standards may not be able to accommodate these interactive media files. This problem is compounded by the presence of clients connecting to a source of the interactive media files having diverse capabilities. For example, at least some of the clients may be coupled with relatively slow communications connections, use computers of relatively slow processing capabilities, or use computers with limited display capabilities.

One method of implementing communications of very large interactive media files has been to maintain multiple versions of the same media, and to serve one to each client based upon the user's capabilities. This method has significant drawbacks with respect to handling and maintenance of files if all possible combinations of different types of scalability are supported in inasmuch as numerous versions of the media are used.

The present invention seeks to provide improved communications and preferably improved systems and methods for experiencing interactive content or multimedia collaboration.

According to an aspect of the present invention there is provided a communications method as specified in claim 1.

According to another aspect of the present invention there is provided a communications session participant as specified in claim 6.

Aspects of the invention relate to communications methods, communications session organizers, communications session participants, articles of manufacture, and communications systems.

According to one aspect, a communications method comprises providing scalable media data, organizing the scalable media data into a plurality of subparts, and providing a plurality of data requests from a plurality of participants requesting different ones of the subparts during user interaction with the media data. After providing the data requests, the method may further include scaling respective ones of the requested subparts of the scalable media data according to receiving attributes of the respective participants, and communicating the scaled subparts to respective ones of the participants.

According to another aspect, a communications session organizer comprises an interface configured to communicatively couple with a plurality of participants during a communications session, and processing circuitry coupled with the interface. The processing circuitry may be configured to access a plurality of data requests from the participants during the communications session, to identify a plurality of subparts of scalable media data responsive to the requests, to scale the subparts of the media data according to respective receiving attributes of the participants, and to output the scaled media data to respective ones of the participants.

Embodiments of the present invention are described below, by way of example only, with reference to the drawings, in which:
Fig. 1 is an illustrative representation of an exemplary interactive media session according to one embodiment.
Fig. 2 is a functional block diagram of a participant according to one embodiment.
Fig. 3 is an illustrative representation of scalable media data of a bit stream according to one embodiment.
Fig. 4 is an illustrative representation of nested tiers of scalable encoded media data according to one embodiment.
Fig. 5 is a block diagram of an organizer according to one embodiment.
Fig. 6 is a flow chart illustrating an exemplary methodology of operations of an organizer of an interactive media session according to one embodiment.
Fig. 7 is a flow chart illustrating an exemplary methodology of operations of a participant of an interactive media session according to one embodiment.

At least some aspects of the disclosure relate to methods and apparatus for experiencing interactive content for diverse users having different capabilities (e.g., diverse communication bandwidths, processing powers, display resolutions, etc.). At least one embodiment permits an interactive media session to be initiated without communication of the entire media file to users. Further in accordance with an exemplary embodiment, users interacting with the media receive content in accordance with their respective receiving and processing capabilities accommodating low and high power users. For example, in one implementation, scalable encoding formats of the media data may be utilized to permit appropriate transcoding to suit the capabilities and preferences of end participants enabling heterogeneous interaction. Additional aspects and embodiments are described herein.

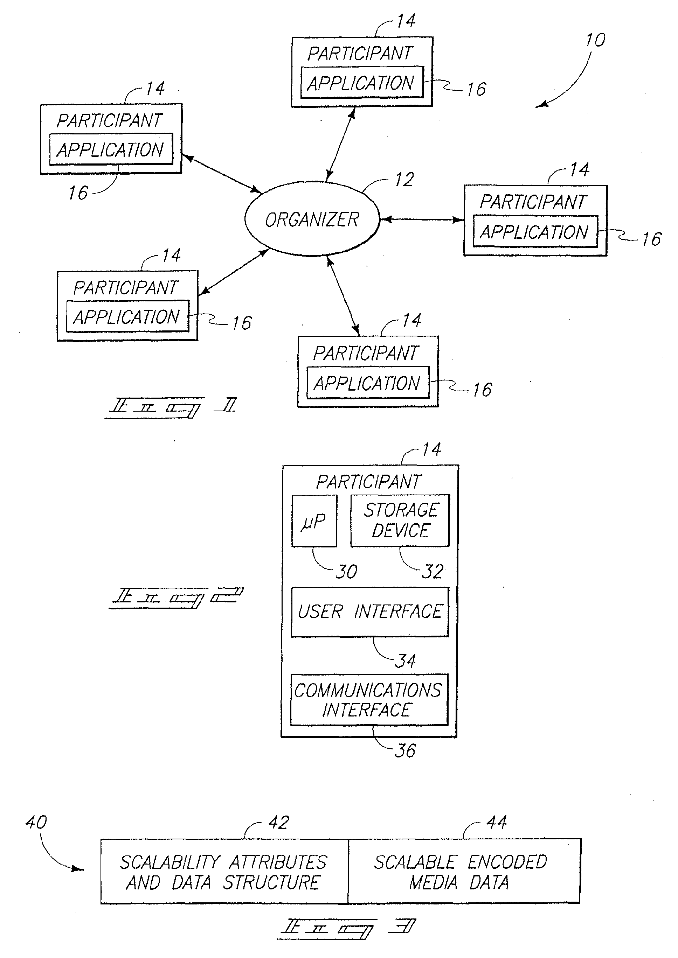

Referring to Fig. 1, an exemplary interactive media communications session implemented using a communications system is depicted as reference character 10. Interactive media session 10 refers to communications of interactive media data within a communications system between a plurality of participants or users. An example of an interactive media session includes providing a 3D initial image (e.g., of a house or other real estate) to users and then providing different views of the initial image (e.g., a view of the side of the house) as the users interact or navigate with the initial image. Exemplary interaction may involve mouse input, keyboard input, joystick input, or other user input with respect to the image and new media data being provided to the user responsive to the user inputs.

The interactive media session 10 of Fig. 1 uses a collaboration infrastructure comprising a session organizer 12 configured to implement communications within the communications system of the collaboration infrastructure. Organizer 12 may comprise a single server or a plurality of servers (e.g., arranged in a peer-to-peer arrangement) in possible embodiments.

A plurality of participants 14 are coupled with organizer 12 in the illustrated embodiment. Exemplary participants 14 comprise computing devices and may be embodied as personal computers, visualization workstations, personal digital assistants (PDAs), or other devices capable of receiving interactive media data, communicating the interactive media data to a user, and processing interactive user commands. During communications, participants 14 connect to organizer 12 using the communications system to form interactive media session 10. In one embodiment, the communications system of the collaboration infrastructure may comprise network connections (e.g., Internet) providing coupling of the participants 14 with organizer 12, and hardware and appropriate programming of organizer 12 and participants 14. At a given moment in time, organizer 12 may be arranged to implement a plurality of different interactive media sessions between respective different groups of participants in at least one embodiment.

In one arrangement, participants 14 individually execute an application 16 to participate in an interactive media session. Applications 16 may implement communications modules to establish communications (e.g., start or join a session) and provide transcoding or decoding operations of received data. In one embodiment, applications 16 provide standardized protocols for communications between organizer 12 and participants 14 allowing sessions 10 to be created, participated in, and terminated by users as well as provide interactive exchange of media in a seamlessly scalable manner. Applications 16 may provide interaction in different ways with different types of media including organizing, transcoding and viewing specific types of content. Accordingly, the communications modules of applications 16 provide connections to organizer 12 so sessions 10 may be initiated, joined, or terminated by participants 14 as well as interacting with content in one embodiment.

Organizer 12 is configured to implement a heterogeneous interactive media session 10 in one aspect wherein organizer 12 communicates with participants 14 having different communications, processing, display or other capabilities. For example, different communication attributes may correspond to the specific implementations or configurations of the present participants 14 which may vary widely in a given interactive media session 10. In a given session 10, participants 14 may have different capabilities corresponding to one or more of the respective network connections providing different rates of data transfer for the participants 14, different processing circuitry (e.g., microprocessor executing respective software or other programming) of participants 14 providing different processing powers, different resolutions of displays of participants 14, etc. Organizer 12 is configured to implement interactive media session 10 providing communication of scalable media data with respect to the heterogeneous participants 14 wherein the participants 14 with limited abilities do not adversely impact communications with respect to participants 14 having greater abilities in one embodiment.

At least some embodiments provide scaling of media data by organizer 12 and communication of the scaled data to participants 14 within a given interactive media session 10 to provide heterogeneous communications. For example, scalable media data enables communications to participants 14 having different capabilities (e.g., bandwidth, processing power, display resolution, etc.). Scalable encoding formats and meta-formats are described in "Proposals for End-To-End Digital Item Adaptation Using Structured Scalable Meta-Formats (SSM)," listing Debargha Mukherjee, Geraldine Kuo, Amir Said, Girodano Beretta, Sam Liu, and Shih-ta Hsiang as authors, (published October, 2002), and a co-pending U.S. patent application entitled "System, Method and Format Thereof For Scalable Encoded Media Delivery," listing Debargha Mukherjee and Amir Said as inventors, having U.S. Patent Application Publication No. US-A-2004/010614, Serial Number US 10/196,506, filed July 15, 2002, and the teachings of which are incorporated herein by reference.

For example, participants 14 may communicate a respective client profile to organizer 12 prior to communications in an interactive media session 10 (e.g., upon session creation or a participant 14 joining a session 10) or at another moment in time. The client profile may define one or more configuration parameter for the respective communicating participant 14 defining one or more maximums for one or more individual levels of scalability (e.g., signal-to-noise ratio (SNR), resolution, temporal and interactivity) that the respective device 14 can receive and process. In another embodiment, organizer 12 senses the configuration parameters of respective recipient participants 14. Exemplary configuration parameters comprise receiving attributes corresponding to the abilities of the respective participant 14 to receive, process or display the media data. Exemplary receiving attributes may be defined by or include unique parameters of one or more of communications bandwidth, processing speeds, or display resolution with respect to the participant 14. Exemplary receiving attributes may also be referred to as outbound constraints and include limit constraints (i.e., limiting values for attribute measures) and optimization constraints (e.g., requested minimization or maximization of attribute measures) as discussed in the US-A-2004/010,614.

Client profiles may convey terms of meaningful defined levels such as signal-to-noise ratio (SNR), resolution, temporal and interactivity to implement scaling operations. Additional levels may be defined and used in other embodiments. The client profiles may convey specifications for these or other qualities in a top-down order by means of a 4-tuple in one embodiment (e.g., a resolution client profile of 1 conveys that the respective participant 14 is able to receive the highest resolution, a resolution client profile of 2 coveys abilities to receive the second highest resolution and so on).

Media data routed through organizer 12 may contain the levels in any nesting order in one embodiment. A header in the bit stream may specify how many of the scalability levels there are and where they occur in the bit stream.

Organizer 12 is arranged to access the client profiles for the respective participants 14 and to scale media data to be communicated to the respective participants 14 in accordance with receiving attributes of the participants 14 providing a plurality of respective scaled data streams for communication to participants 14. For example, organizer 12 may compare the levels of a bit stream with the client profile for respective participants 14 and rearrange the respective bit streams accordingly. Organizer 12 may accomplish the rearrangement irrespective of the nesting order if the bit stream conforms to the scalable media format. Further scaling details are described in US-A-2004/010,614.

At least some additional aspects facilitate the interactive media sessions 10 by communicating less than an entirety of the interactive media data (e.g., resident upon or accessible by organizer 12) to some or all participants 14 during a session 10. As described herein, interactive media data may be indexed by subparts for selective communication responsive to user inputs generated by participants 14. For example, in one embodiment, organizer 12 may communicate an initial subpart as well as an index to respective participants 14. The initial subpart may comprise interactive media data usable by participants 14 to display an initial image. The user may then interact with the displayed image by generating user inputs. For example, the user may request different views of a subject of the initial image during navigation. The user inputs may be translated by the participant into an addressing value of an index to request additional subparts of the media data. Accordingly, different portions of an entirety of the interaction media data may be communicated to participants 14 during interaction.

In one implementation, the initial image may comprise a 3D interactive image of a subject (e.g., house). An index of the 3D image may be defined in any convenient or desired format for retrieving subsequent interactive media data. In one example, viewing angles about the subject may correspond to respective addressing values of the index. In another example, addressing values may be represented as vectors, perhaps corresponding to coordinates of a multi-dimensional grid of the 3D image. In another possible embodiment, addressing values of the index may correspond to details of subject, such as internal components of the 3D image (e.g., rooms of the house). Any suitable indexing scheme or space may be used by organizer 12 and participants 14 to provide additional interactive media data to users as needed. The additional interactive media data may include data regarding additional details of information present in the initial interactive media data or data regarding details not present in the initial interactive media data in at least some embodiments.

Users of individual participants 14 are free to interact with or navigate the initial media data in different ways as desired, and accordingly, different user inputs may be generated by the users of the individual participants 14 during the respective individual interactions. The respective participants 14 are configured to translate the user inputs of the interactions into respective addressing values of the index. Thereafter, the participants 14 communicate the respective addressing values via data requests to organizer 12 to implement the communication of subsequent interactive media data desired by the participants 14 and as indicated by the communicated addressing values. Organizer 12 interprets the received addressing values and operates to identify appropriate additional subparts of the interactive media data for communication to respective ones of the participants 14 responsive to the data requests. Organizer 12 may scale communicated interactive media data according to the respective capabilities of participants 14 in one embodiment. Additional details of exemplary implementations of communications of interactive media data are described below.

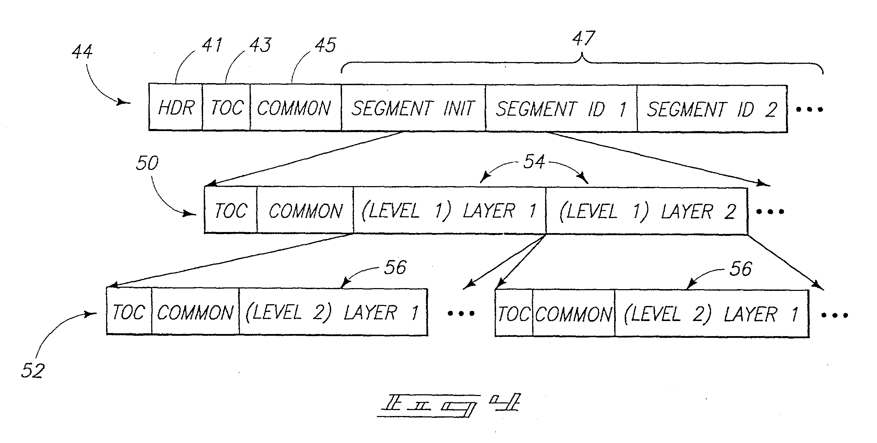

Referring to Fig. 2, an exemplary configuration of a participant 14 for experiencing interactive media data is shown. In the illustrated embodiment, individual participants 14 comprise processing circuitry 30, storage circuitry or device 32, a user interface 34, and a communications interface 36.

In one embodiment, processing circuitry 30 may comprise circuitry configured to implement desired programming. For example, the processing circuitry may be implemented as a processor or other structure configured to execute executable instructions including, for example, software and/or firmware instructions. Other exemplary embodiments of processing circuitry 30 include hardware logic, PGA, FPGA, ASIC, and/or other structures. These examples of processing circuitry are for illustration and other configurations are possible. Processing circuitry 30 may access programming of application 16, decode interactive media data, communicate interactive media data to a respective user, receive and process user inputs providing interaction, implement indexing operations with respect to interactive media data, formulate data requests to be communicated to organizer 12, and perform other desired operations.

Storage circuitry or device 32 may be configured to store electronic data and/or programming such as executable instructions (e.g., software and/or firmware), data, or other digital information and may include processor-usable media. Exemplary programming includes applications 16 in one embodiment. Processor-usable media includes any article of manufacture which can contain, store, or maintain programming, data and/or digital information for use by or in connection with an instruction execution system including processing circuitry in the exemplary embodiment. For example, exemplary processor-usable media may include any one of physical media such as electronic, magnetic, optical, electromagnetic, infrared or semiconductor media. Some more specific examples of processor-usable media include, but are not limited to, a portable magnetic computer diskette, such as a floppy diskette, zip disk, hard drive, random access memory, read only memory, flash memory, cache memory, and/or other configurations capable of storing programming, data, or other digital information.

User interface 34 is arranged to communicate content of interactive media data to a user and to receive user inputs during the interaction. User interface 34 may comprise a display (e.g., cathode ray tube, liquid crystal display, or other arrangement) to depict visual media content and an input device (e.g., keyboard, mouse, or other arrangement) to receive user inputs. Other implementations are possible.

Communications interface 36 is arranged to implement bi-directional communications of the participant with respect to external devices, such as organizer 12. Communications interface 36 may embodied as a network interface card (NIC), modem, access point, or any other appropriate communications device.

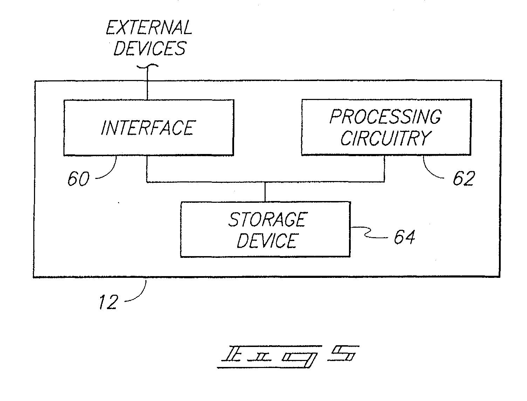

Referring to Fig. 3, one possible embodiment of a format 40 for a bit stream of scalable interactive media data is illustrated. The interactive media data may be generated and formatted by one or more of participants 14, organizer 12, or other appropriate originating device. The scalable interactive media data may be stored locally within organizer 12 or accessed from a remote storage location by organizer 12. The format 40 may comprise a non-media type specific format for scalable encoded media data in one arrangement. Exemplary encoded media data may be compressed and encrypted in one embodiment.

The depicted format 40 comprises a first portion 42 and a second portion 44 in accordance with a content-agnostic meta format of the described embodiment. Format 40 allows one or more levels of scalability to co-exist in a bit stream, and allows rearrangement tasks to produce bit streams of different scales and quality without knowing the actual content or compression scheme applied. In an embodiment wherein all media data is routed through organizer 12, the organizer 12 may supply different subsets of data to different participants 14 based upon the respective configuration parameters of the respective participants 14.

First portion 42 corresponds to non-media type scalability attributes and second portion data structure information, and second portion 44 corresponds to original scalable encoded media data arranged in non-media type specific indexable structure in one embodiment. More specifically, exemplary non-media scalability attributes may include attributes common to all media types and may include size of a bit stream, SNR and processing power used to process and experience data of the bit stream in one embodiment. Scalability attributes may be used to implement appropriate scaling of the media data. First portion 42 also includes non-media type specific data structure information of second portion 44 and comprising dimensions of a multi-dimensional representation of the scalable media data of second portion 44 in one embodiment.

Second portion 44 corresponds to scalable media data arranged in a content independent indexable data structure in the described embodiment. The media data is arranged into a generic format regardless of content of the media data permitting generic transcoding wherein the transcoding operations are performed without knowledge of the data content and without decrypting or decoding the media data enabling a single infrastructure (e.g., organizer 12) to deliver the media data according to a plurality of scales in one embodiment. Processing circuitry of organizer 12 may comprise a transcoder to implement scaling operations during transcoding including one or more of bit truncation, bit-stream skips, or bit repacking in accordance with capabilities of participants 14. Further details regarding exemplary scalable formats including first and second portions 42, 44 are described in US-A-2004/010,614.

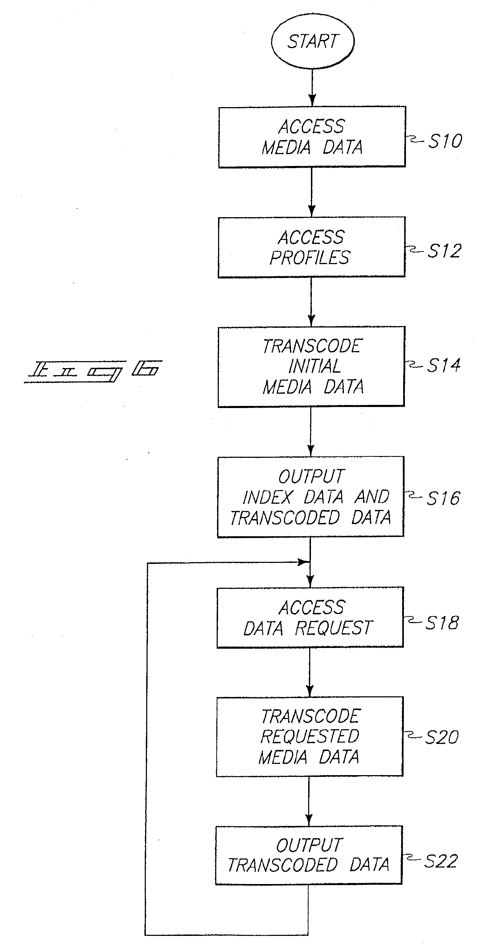

Referring to Fig. 4, indexable concepts of second portion 44 of a bit stream of interactive media data are described according to one embodiment. The indexing of second portion 44 may implement both scaling operations and data selection operations responsive to received data requests in the depicted embodiment. The exemplary second portion 44 comprises a header 41, a table of contents (TOC) 43, common portion 45 and a plurality of subparts 47 which comprise segments of interactive media data in the depicted embodiment. Individually, subparts 47 are relatively small compared with the entire bit stream.

Header 41 may provide the actual order for a given media in the bit stream. For example, header 41 may comprise an index including a correlation of addressing values with one or more of subparts 47. Header 41 may be accessed by organizer 12 and used to translate received addressing values in data requests from participants 14 to identify one or more of subparts 47 being requested by respective participants 14. Following identification of appropriate subpart(s) 47, the interactive media data of the identified subpart(s) 47 may be scaled if desired and communicated to the requesting participants 14 to implement the media interaction.

Table of contents 43 includes locations of subparts 47 in the bit stream. For example, following the identification of requested subparts 47 as described above, the organizer 12 may access the table of contents 43 for specification of exact locations of the requested media data in the bit stream providing access to the requested interactive media data.

Data of common portion 45 is used by participants 14 to initialize a respective decoding and viewing object. Participants 14 may thereby operate to decode interactive media data previously transcoded by organizer 12 and control user interface 34 to display the interactive content.

Subparts 47 have respective identifiers "segment INIT," "segment ID 1," "segment ID 2," etc. In one embodiment, segment INIT may correspond to the media data of the initial visual image described above which is initially scaled and communicated to participants 14 to start the media experience process and interaction. Thereafter, the other segments may be individually requested by respective participants 14 as interaction occurs using the addressing values which identify the desired segments by the respective segment ID 1, ID 2, etc. in the described example. Accordingly, the segment ID may be comprise an index into the data set and individual subparts 47 may be independently represented in a scalable manner with possibly multiple nesting levels described herein.

The exemplary embodiment of Fig. 4 includes a plurality of nested tiers or levels 50, 52 of abstraction for respective individual subparts 47 to implement data scaling operations. The data is indexable using a plurality of table of contents (TOCs) where individual levels 50, 52 are indexable by respective TOCs. TOCs provide random access and facilitate identification of subsets 54, 56 for dropping or truncating during transcoding operations. In one example, four possible nesting levels corresponding to resolution, temporal, SNR and interactivity may be provided in any desired order. The order of one or more nesting level used for respective interactive media content may be conveyed in header 41 and may be referred to as a media profile permitting organizer 12 to know how to derive subsets 54, 56 from the bit stream for transmission to clients.

First tier 50 includes first and second bit-stream subsets 54. Scalability of media data may be achieved by grouping subsets to provide scalability to a particular tier. For example, a first scalability may be provided by only the first subset 54 while a second scalability may be provided by the first and second subsets 54. Further, individual subsets 54 may be further scaled using subsets 56 of level 52 and additional levels may also be provided to enable further scaling. The type of scalability implemented by respective levels 50, 52 corresponds to the content of the data of the respective levels 50, 52. One example of a multi-tier scalable bit-stream is a JPEG2000 bit-stream wherein the highest level 50 corresponds to resolution scalability and within individual resolution scalable subsets are nested a second level of signal-to-noise ratio subsets. Alternately, there are other image compression schemes wherein the highest level is SNR and within SNR layers there are nested resolution layers. Exemplary scalability attributes for scaling include resolution, SNR, temporal, and interactivity as described in US-A-2004/010,614.

Additional scalability attributes may be used for scaling in other embodiments. In addition, one or more different scalability attributes may be used to scale a given dataset of media data for different recipient participants 14 of a given interactive media session 10.

Following identification of the respective subparts 47, a transcoder of organizer 12 accesses the identified scalable media data of the subparts 47 and transcodes the data in accordance with configuration parameters of the requesting participant 14. Transcoding of the media data operates to scale the media data in accordance with the communications abilities of the requesting participant 14. The transcoded (i.e., scaled) media data is communicated from organizer 12 to the requesting participant 14.

In one embodiment, the media data may be scaled using different scalability attributes for different requesting participants 14 as mentioned above. Accordingly, the scaled media data communicated to the requesting participants 14 may comprise plural digital data streams having different amounts of data usable to depict the same subject (e.g., different amounts of content providing different resolutions of the subject such as the initial visual image corresponding to the Segment INIT).

Scaling is implemented in the described embodiment using configuration parameters comprising receiving attributes of the requesting participants 14 and the scalability attributes of the media data. For example, a transcoder implemented by organizer 12 may access the respective receiving attributes for one or more appropriate requesting participants 14 to receive the data, match the scalability attributes and the respective receiving attributes, and scale the media data using the matched attributes to truncate, rearrange or otherwise modify the media data using the subsets to provide the respective data stream(s) for communication. Further details regarding scaling in one embodiment are described in US-A-2004/010,614. Other scaling configurations are possible.

Scaling enables heterogeneous participation in interactive media session 10. The originating media data provides data which may comprise images, video, animation, etc. of a subject. Scaling of the media data provides a plurality of bit streams which may have different quantities of data content usable for representation and navigation of the subject by participants 14.

As described herein, data requests formulated by individual participants 14 to access subparts 47 of interactive media data from organizer 12 may be random in nature responsive to user inputs provided during interaction in one embodiment. Organizer 12 may implement compression of the interactive media data using efficient random access capabilities in addition to scaling of the compressed bit stream to permit organizer 12 to dynamically transcode the interactive media data bit stream based on capabilities of participants 14. Details regarding exemplary compression having efficient random access capabilities are described in a U.S. patent application entitled "Communications Methods, Compressed Media Data Decoding Methods, Compressed Media Data Decoders, Articles Of Manufacture, And Data Communications Systems," listing Debarargha Mukherjee as inventor, having Attorney Docket No. 100201426-1, the teachings of which are incorporated herein by reference.

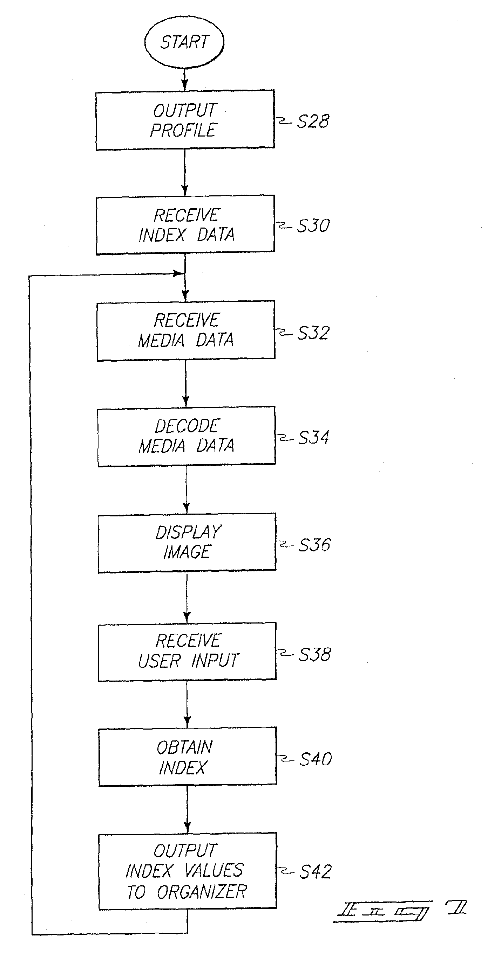

Referring to Fig. 5, an exemplary configuration of organizer 12 embodied as a server is shown. The depicted organizer 12 includes an interface 60, processing circuitry 62, and a storage device 64. Other embodiments are possible. For example, organizer 12 may comprise a plurality of servers.

Interface 60 is configured to implement bi-directional communications with respect to participants 14. Exemplary configurations of interface 60 include a network interface card (NIC), access point, or any other appropriate device for implementing communications.

In one embodiment, processing circuitry 60 may comprise circuitry configured to implement desired programming. For example, the processing circuitry 60 may be implemented as a processor or other structure as described above with respect to processing circuitry 30 of participant 14. Programming may configure processing circuitry 60 to access bit streams conforming to the format 40 and provide manipulations of the bit streams to create content suitable for different connections and capabilities of heterogeneous participants 14. Programming may also configure the processing circuitry 60 to implement indexing operations to identify requested subparts 47 of interactive media data, and to scale the media data of the identified subparts 47 to provide communications with the participants 14 and to provide other desired operations.

Similar to storage device 32 described above, storage device 62 may comprise processor-usable media configured to store programming arranged to cause organizer 12 to arrange and conduct interactive media sessions 10 including implementing identification and scaling operations with respect to interaction media data. Storage device 62 may also store any other appropriate digital information or programming.

Referring to Fig. 6, an exemplary methodology performed by processing circuitry 62 of organizer 12 to enable user interaction with media data according to one embodiment is shown. Other methods are possible including more, less or alternative steps. Further, the ordering of one or more of the illustrated steps may occur in different sequences in other arrangements.

At a step S10, the processing circuitry is configured to access the bit stream of the interactive media data. The accessing may include accessing the bit stream resident upon the organizer or obtaining the bit stream from an external source, such as one of the participants.

At a step S12, the processing circuitry is configured to access client profiles of respective participants of the respective interactive media session. Alternately, the processing circuitry may sense or otherwise obtain information regarding the capabilities of the participants of the session.

At a step S14, the processing circuitry is configured to transcode the initial interactive media data (e.g., segment INIT). The interactive media data may be scaled according to respective configuration parameters of the participants.

At a step S16, the processing circuitry is configured to output index data (e.g., header and TOC information), data of common portion 45, and the transcoded data corresponding to the initial interactive media data. The index data permits the participants to implement indexing operations to request subparts of interactive media data during user interaction and the transcoded data permits the participants to communicate the initial interactive media data to the user to begin the interactive media experience.

At a step S18, the processing circuitry accesses a data request received from one or more participant of the interactive media session. The data request may comprise addressing values of the index identifying one or more requested subpart of the interactive media data.

At a step S20, the processing circuitry identifies one or more requested subpart and transcodes the interactive media data of the one or more requested subpart corresponding to the configuration parameters of the requesting participants.

At a step S22, the processing circuitry operates to control communication of the transcoded data to the requesting participants.

Thereafter, if the process has not been terminated, the processing circuitry may return to step S18 to access subsequent data requests received from participants.

Referring to Fig. 7, an exemplary methodology performed by processing circuitry 30 of one of participants 14 to enable user interaction with media data according to one embodiment is shown. Other methods are possible including more, less or alternative steps. Further, the ordering of one or more of the illustrated steps may occur in different sequences in other arrangements.

At a step S28, the processing circuitry is configured to output a respective client profile comprising the configuration parameters of the respective participant. The participant may also communicate a data request for initial data to initiate participation in the interactive media session in step S28.

At steps S30 and S32, the processing circuitry is configured to receive the index data and the initial interactive media data from the organizer.

At a step S34, the processing circuitry is configured to decode the interactive media data received from the organizer.

At a step S36, the processing circuitry is configured to implement communication of the interactive media data to a user. For example, the processing circuitry may control the user interface to depict the initial visual image for interaction.

At a step S38, the processing circuitry is configured to receive user inputs from the user interface during the interaction.

At a step S40, the processing circuitry is configured to access the index and to translate the user inputs into respective addressing values of the index.

At a step S42, the processing circuitry is configured to output the index addressing values to the organizer in one or more data request.

Thereafter, if the process has not been terminated, the processing circuitry may return to step S32 to receive and process the subsequent interactive media data requested in step S42.

At least one embodiment described herein enhances interaction of heterogeneous users with respect to interactive media data. For example, the described embodiment may be useful in applications involving visualization of high-resolution interactive 3D content, multimedia collaboration, etc. At least some aspects of the disclosure provide scaling of interactive media data and delivery of interactive content on a "need to know" basis. Unauthorized copying of interactive media data is extremely difficult inasmuch as files are not transmitted in their entireties according to at least one aspect.

In addition, organizer 12 may be configured to be content-independent and universal across different types of interactive media data and across different applications built around them. Further, organizer 12 may not know what the interactive media data represents, or what compression and/or encryption technology is employed. Organizer 12 may monitor where individual subparts 47 of the interactive media data begin and end to extract desired portions of the interactive media data in a random manner for communication to participants 14 in one embodiment. In one example, individual subparts 47 may be scalable compressed images in an exemplary image based 3D media experience and as users navigate through a screen using user inputs, organizer 12 serves random image requests.

According to at least one described embodiment, the organizer 12 and participants 14 understand a common interactive scalable meta-file-format for the content to be experienced. Applications 16 of participants 14 interpret, decode and permit display of received interactive media data and the scalable communications protocol indexed by the segment identifiers for a given interactive media session 10 may be standardized in at least one embodiment. One embodiment facilitates and enhances experiences with respect to interactive media data by communicating only a portion of the content to initiate a session 10 and providing scalable interactive media data commensurate with the capabilities of participants accommodating "low" and "high" power users. Inasmuch as at least some described protocols and architecture are content-independent and general-purpose, it may be convenient to support the services in organizers 12 comprising one or more generic server. A large number of interactive media experiencing applications of different kinds (e.g., games, visualization, or collaboration applications) can use a common organizer 12 to experience the media.

The protection sought is not to be limited to the disclosed embodiments, which are given by way of example only, but instead is to be limited only by the scope of the appended claims.

The disclosures in United States patent application No. 10/699,444, from which this application claims priority, and in the abstract accompanying this application are incorporated herein by reference.

## Claims

1. A communications method including the step of:
providing scalable media data;
organizing the scalable media data into a plurality of subparts (47);
providing a plurality of data requests from a plurality of participants (14) requesting different ones of the subparts (47) during user interaction with the media data;
after providing the data requests, scaling respective ones of the requesting subparts (47) of the scalable media data according to receiving attributes of the respective participants (14); and
communicating the scaled subparts to respective ones of the participants.

2. A method as in claim 1, including the step of accessing random subparts (47) corresponding to the data requests, and wherein the scaling comprises scaling the accessed subparts (47).

3. A method as in claim 1 or 2, including the step of communicating an initial one of the subparts to the participants (14), and wherein the receiving is responsive to the communicating.

4. A method as in claim 3, wherein the initial one of the subparts (47) corresponds to an initial visual image to be depicted by the participants (14), and the step of forwarding of the initial one of the subparts (47) includes forwarding a plurality of data streams of different amounts of data corresponding to the receiving attributes of the respective participants (14).

5. A method as in claim 4, including the step of depicting the initial visual image at a plurality of different resolutions using the participants (14) and responsive to the data streams comprising different amounts of data.

6. A communications session participant (14) including:
a user interface (34) configured to receive user inputs of a respective user;
a communications interface (36) configured to receive scaled media data;
a display configured to depict visual information of the scaled media data to the user; and
processing circuitry (30) coupled with the user interface (34), the communications interface (36) and the display, wherein the processing circuitry (30) is configured to decode the scaled media data, to control the depiction of the decoded media data using the display, to receive user input including interactive commands corresponding to the depicted decoded media data, to formulate data requests responsive to the user input, and to control communication of the data requests to a source of the media data to initiate communication of additional scaled media data from the source to the communications session participant (14) and corresponding to the interactive commands of the user.

7. A participant as in claim 6, wherein the processing circuitry (30) is configured to control the communication of receiving attributes to the source of the media data, and wherein the received scaled media data comprises media data scaled according to the receiving attributes.

8. A participant as in claim 6 or 7, wherein the received scaled media data is configured to control the depiction of an initial visual image of a subject, and the interactive commands and data requests correspond to different views of the initial visual image.

9. A participant as in claim 6, 7 or 8, wherein the processing circuitry (30) is configured access an index responsive to the user input, and to formulate the data requests using addressing values of the accessed index.

10. A participant as in claim 9, wherein the addressing values correspond to subparts (47) of the media data not yet communicated from the source to the participant at the time of the formulation of the data requests.
